(19) Europäisches Patentamt
European Patent Office
Office européen des brevets

(11) EP 0 997 269 B1

(12) EUROPÄISCHE PATENTSCHRIFT

(45) Veröffentlichungstag und Bekanntmachung des Hinweises auf die Patenterteilung:
**14.05.2008 Patentblatt 2008/20**

(51) Int Cl.:
***B32B 27/36*** *(2006.01)* ***C08J 7/04*** *(2006.01)*

(21) Anmeldenummer: **99120065.0**

(22) Anmeldetag: **19.10.1999**

# (54) Koextrudierte, biaxial orientierte Polyesterfolie für die Metallisierung, Verfahren zu ihrer Herstellung und ihre Verwendung

Coextruded, biaxially oriented, polyester film for metallisation, method for its production and its use

Feuille en polyester, coextrudée et orientée biaxialement pour métallisation, méthode pour sa production et son utilisation

(84) Benannte Vertragsstaaten:
**DE FR GB IT LU NL**

(30) Priorität: **29.10.1998 DE 19849661**

(43) Veröffentlichungstag der Anmeldung:
**03.05.2000 Patentblatt 2000/18**

(73) Patentinhaber: **Mitsubishi Polyester Film GmbH**
**65203 Wiesbaden (DE)**

(72) Erfinder:
- **Peiffer, Herbert**
  **55126 Mainz (DE)**
- **Davis, Richard Lee**
  **65187 Wiesbaden (DE)**
- **Hellmann, Jörg**
  **55134 Mainz (DE)**

(74) Vertreter: **Schweitzer, Klaus et al**
**Zounek Plate Schweitzer**
**Patentanwaltskanzlei**
**Rheingaustrasse 196**
**65203 Wiesbaden (DE)**

(56) Entgegenhaltungen:
**EP-A- 0 144 878** **FR-A- 2 656 320**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 997 269 B1

## Beschreibung

Die Erfindung betrifft eine koextrudierte, biaxial orientierte Polyesterfolie, die nach ihrer Metallisierung eine niedrige Sauerstoffpermeation und gute Haftungseigenschaften zum aufgedampften Metall aufweist, aufgebaut aus mindestens einer Basisschicht B und mindestens einer auf dieser Basisschicht aufgebrachten Schicht A, wobei diese Schicht A eine definierte Anzahl von Erhebungen aufweist, weniger als 0,06 Gew.-% eines inerten Füllmaterials enthält und eine Copolyesterbeschichtung trägt. Die Erfindung betrifft weiterhin ein Verfahren zur Herstellung der Folie und ihre Verwendung.

In vielen Fällen wird bei Lebensmittelverpackungen ein hohe Sperrwirkung gegenüber Gasen, Wasserdampf und Aromastoffen verlangt (gleichbedeutend mit einer geringen Durchlässigkeit oder geringen Permeation). Ein gängiges Verfahren, solche Verpakkungen herzustellen, besteht darin, die dafür verwendeten Kunststofffolien mit Aluminium im Hochvakuum zu bedampfen bzw. zu metallisieren.

Aufgrund ihrer guten Sperreigenschaften werden mit metallisierten Folien insbesondere Lebens- und Genußmittel verpackt, bei denen durch lange Lager- oder Transportzeiten die Gefahr besteht, dass im Falle einer nicht ausreichenden Barriere die verpackten Lebensmittel verderben, ranzig werden oder an Geschmack verlieren, beispielsweise bei Kaffee, fetthaltigen Snacks (Nüssen, Chips u.a.) oder kohlensäurehaltigen Getränken (in Standbeuteln; engl.: pouches).

Sollen Polyesterfolien mit einer aufgedampften Aluminiumschicht als Verpackungsmaterial verwendet werden, dann sind sie in der Regel Bestandteil eines mehrschichtigen Folienverbunds (Laminat). Die Beutel werden auf ihrer Innenseite (d.h. auf der dem Füllgut zugewandten Seite) gesiegelt, wobei die Siegelschicht in der Regel aus Polyethylen oder Polypropylen besteht. Der Folienverbund weist dabei den folgenden typischen Aufbau auf: Polyesterschicht/Aluminiumschicht/Kleberschicht/Siegelschicht.

Bei einer Dicke des Laminats von etwa 50 bis 150 µm ist die Metallschicht nur 10 bis 80 nm dick. Diese sehr dünne Funktionsschicht genügt bereits, um einen ausreichenden Lichtschutz und sehr gute Barriereeigenschaften zu erreichen.

Detaillierte Untersuchungsergebnisse über den Einfluß der Substratoberfläche von Polyesterfolien auf die Barriereeigenschaften sind in der Dissertation von H. Utz (Technische Universität München 1995: "Barriereeigenschaften aluminiumbedampfter Kunststofffolien") zu finden.

In der EP 0 144 878 wird eine Polyesterfolie beschrieben, die zur Verbesserung der Haftung zur aufgedampften Metallschicht eine Polyesterbeschichtung trägt, die beim Herstellungsprozeß als wässrige Dispersion auf die Folie aufgebracht wird. Nachteilig daran ist, dass durch die Polyesterbeschichtung die Barrierewirkung der metallisierten Folie deutlich verschlechtert wird.

Für viele Anwendungen ist es jedoch wünschenswert, eine Folie bereitzustellen, die sich sowohl durch gute Barriereeigenschaften als auch durch ein gutes Haftungsvermögen gegenüber der aufgedampften Metallschicht auszeichnet.

Aufgabe der vorliegenden Erfindung war es daher, eine koextrudierte, biaxial orientierte Polyesterfolie zur Verfügung zu stellen, die sich nach der Metallisierung durch eine hohe Sauerstoffbarriere auszeichnet und eine hohe Haftung zum aufgedampften Metall aufweist. Die Folie soll sich außerdem durch gute optische Eigenschaften und ein gutes Verarbeitungsverhalten auszeichnen. Zusammengefaßt bestand die Aufgabe darin, eine Folie mit folgender Merkmalkombination zur Verfügung zu stellen:

- geringe Sauerstoffpermeation der Polyesterfolie nach der Metallisierung
- hohe Haftung zwischen der Polyesterfolie und der aufgedampften Metallschicht
- hoher Glanz und niedrige Trübung
- geringe Reibungskoeffizienten (kein Blocken der Folie gegen sich selbst).

Gelöst wird die Aufgabe durch eine koextrudierte Polyesterfolie mit einer Basisschicht B, die zu mindestens 80 Gew.-% aus einem thermoplastischen Polyester besteht und einer oder mehreren weiteren Schichten, wobei mindestens eine äußere Schicht A

i) eine Anzahl von Erhebungen N pro $mm^2$ Folienoberfläche aufweist, die mit ihren jeweiligen Höhen h und Durchmesser d über folgende Gleichungen korreliert sind

$$\log N/mm^2 < A_h - B_h * \log h/\mu m, \qquad 0{,}05\ \mu m < h < 1{,}0\ \mu m \qquad (1)$$

$$A_h = 1{,}4 \qquad B_h = 2{,}5$$

$$\log N/mm^2 < A_d - B_d * \log d/\mu m, \qquad 0{,}2\ \mu m < d < 10{,}0\ \mu m \qquad (2)$$
$$A_d = 3{,}4; \qquad B_d = 2{,}4$$

und

ii) eine Copolyesterbeschichtung trägt, die aus dem Kondensationsprodukt der folgenden Monomeren bzw. deren zur Bildung von Polyestern befähigten Derivaten besteht:

A) 65 bis 95 Mol-% Isophthalsäure;
B) 0 bis 30 Mol-% wenigstens einer aliphatischen Dicarbonsäure mit der Formel

$$HOOC(CH_2)_nCOOH,$$

wobei n im Bereich von 1 bis 11 liegt;
C) 5 bis 15 Mol-% wenigstens eines Sulfomonomeren enthaltend eine Alkalimetallsulfonatgruppe an dem aromatischen Teil einer Dicarbonsäure;
D) die zur Bildung von 100 Mol-% Kondensat notwendige stöchiometrische Menge eines copolymerisierbaren aliphatischen oder cycloaliphatischen Glykols mit 2 bis 11 Kohlenstoffatomen;

wobei die Prozentangaben jeweils bezogen sind auf die Gesamtmenge der Polyesterbeschichtung bildenden Monomeren; und
iii) die Schicht A weniger als 0,06 Gew.-% eines inerten Füllmaterials enthält.

Unter Erhebungen im Sinne der vorliegenden Erfindung werden kegelige Erhebungen verstanden, die aus der planaren Folienoberfläche hervorragen.

Zur Erzielung einer niedrigen Sauerstoffpermeation einer mit oben beschriebenen Copolyesterschicht beschichteten und metallisierten Folie gemäß Aufgabenstellung muß entsprechend den Gleichungen (1) und (2) die Anzahl an Erhebungen N pro $mm^2$ Folienoberfläche A unterhalb einem bestimmten Zahlenwert liegen. Dieser Zahlenwert ist durch die rechten Seiten der Gleichungen (1) und (2) in Abhängigkeit der Höhe h und dem Durchmesser d der Erhebungen festgelegt.

Biaxial orientierte Polyesterfolien, die durch obige Gleichungen beschrieben werden, zeichnen sich durch eine vergleichweise geringe Anzahl von Erhebungen der zu metallisierenden Schicht A aus. Die Anzahl an Erhebungen ist im Bereich $h < 0{,}5\ \mu m$, besonders im Bereich $h < 0{,}4\ \mu m$ und ganz besonders im Bereich $h < 0{,}3\ \mu m$ deutlich geringer als es nach dem Stand der Technik bekannt ist.

Ist die Dichte der Erhebungen $N/mm^2$ klein, so ist die Barriere im vorliegendem Sinne gut, ist die Dichte der Erhebungen dagegen groß, so ist die Barriere im vorliegendem Sinne schlecht.

In einer bevorzugten Ausführungsform der erfindungsgemäßen Folie besitzt die Konstante $A_h$ der vorgenannten Gleichung (1) den Wert $A_h = 1{,}18$ und in einer besonders bevorzugten Ausführungsform den Wert $A_h = 1{,}0$. In einer ebenfalls bevorzugten Ausführungsform der erfindungsgemäßen Folie besitzt die Konstante $B_h$ der vorgenannten Gleichung (1) den Wert $B_h = 2{,}2$ und in einer besonders bevorzugten Ausführungsform den Wert $B_h = 2{,}1$.

In einer bevorzugten Ausführungsform der erfindungsgemäßen Folie besitzt die Konstante $A_d$ der vorgenannten Gleichung (2) den Wert $A_d = 3{,}0$ und in einer besonders bevorzugten Ausführungsform den Wert $A_d = 2.6$. In einer ebenfalls bevorzugten Ausführungsform besitzt die Konstante $B_d$ der vorgenannten Gleichung (2) den Wert $B_d = 2{,}3$ und in einer besonders bevorzugten Ausführungsform den Wert $B_d = 2{,}2$.

Die Beschichtungscopolyester werden wie bereits angegeben durch Polykondensation von

A) Isophtalsäure,
B) einer aliphatischen Dicarbonsäure mit der Formel

$$HOOC(CH_2)_nCOOH,$$

wobei
n im Bereich von 1 bis 11 liegt,
C) einem Sulfomonomeren enthaltend eine Alkalimetallsulfonatgruppe an dem aromatischen Teil einer aromatischen Dicarbonsäure und D) wenigstens einem aliphatischen oder cycloaliphatischen Alkylenglykol mit etwa 2 bis 11

Kohlenstoffatomen hergestellt. Die insgesamt anwesenden Säureäquivalente sollen auf molarer Basis im wesentlichen den insgesamt anwesenden Glykoläquivalenten entsprechen.

Als Komponente B) der Copolyester geeignete Dicarbonsäure sind z.B. Malon-, Adipin-, Azelain-, Glutar-, Sebacin-, Kork-, Bernstein- und Brassylsäure sowie Mischungen dieser Säuren oder deren zur Bildung von Polyestern befähigter Derivate. Von den genannten Säuren wird Sebacinsäure bevorzugt.

Beispiele für Sulfomonomere, die eine Metallsulfonatgruppe an dem aromatischen Teil einer aromatischen Dicarbonsäure (Komponente C) enthalten, sind solche Monomere die der folgenden allgemeinen Formel entsprechen:

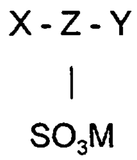

In dieser Formel ist
M ein einwertiges Kation eines Alkalimetalls
Z ein dreiwertiger aromatischer Rest, und
X und Y sind Carboxylgruppen oder Polyester bildende Äquivalente.

Monomere dieser Art sind in den US-PSen 3,563,942 und 3,779,993 beschrieben. Beispiele solcher Monomeren sind Natrium-sulfoterephthalsäure, Natrium-5-sulfo-isophthalsäure, Natrium-sulfophthalsäure, 5-(p-Natriumsulfphenoxy)-isophthalsäure, 5-(Natrium-sulfopropoxy)-isophthalsäure und dergleichen Monomere sowie deren zur Bildung von Polyestern befähigte Derivate, wie z.B. die Dimethylester. M ist vorzugsweise $Na^+$, $Li^+$ oder $K^+$.

Unter dem Begriff "zur Bildung von Polyestern befähigte Derivate" sind hier Reaktionsteilnehmer mit solchen Gruppen zu verstehen, die zu Kondensationsreaktionen, insbesondere Umesterungsreaktionen, zur Bildung von Polyesterbindungen befähigt sind. Zu solchen Gruppen zählen Carboxylgruppen sowie deren niedere Alkylester, z.B. Dimethylterephthalat, Diethylterephthalat und zahlreiche andere Ester, Halogenide oder Salze. Bevorzugt werden die Säuremonomeren als Dimethylester verwendet, da auf diese Weise die Kondensationsreaktion gesteuert werden kann.

Als Komponente D) geeignete Glykole sind z.B. Ethylenglykol, 1,5-Pentadiol, 1,6-Hexandiol, Neopentylglykol, 1,10-Decandiol, Cyclohexan-dimethanol und ähnliche Substanzen. Bevorzugt wird Ethylenglykol verwendet.

Die Copolyester können durch bekannte Polymerisationstechniken hergestellt werden. In allgemeinen wird so verfahren, dass die Säurekomponenten mit Glykol zusammengebracht und in Anwesenheit eines Veresterungskatalysators erhitzt werden, mit anschließender Zugabe eines Polykondensationskatalysators.

Es hat sich gezeigt, dass die verhältnismäßigen Anteile der Komponenten A, B, C und D, die zur Herstellung der Mischungen eingesetzt werden, entscheidend für das Erzielen einer beschichteten Folie mit einer guten Haftung gegenüber einem nach Metallisierungsverfahren aufgebrachten Metall sind. So muß z.B. Isophthalsäure (Komponente A) zu mindestens etwa 65 Mol-% als Säurekomponente anwesend sein. Bevorzugt ist die Komponente A als reine Isophthalsäure, die in einer Menge von etwa 70 bis 95 Mol-% anwesend ist.

Für die Komponente B gilt, dass jede Säure mit der genannten Formel zufriedenstellende Ergebnisse bringt, wobei Adipinsäure, Azelainsäure, Sebacinsäure, Malonsäure, Bernsteinsäure, Glutarsäure und Mischungen dieser Säuren bevorzugt werden.

Die angestrebte Menge innerhalb des angegebenen Bereiches beträgt bevorzugt 1 bis 29 Mol-%, bezogen auf die Säurekomponenten der Polyesterbeschichtung, wenn die Komponente B in der Zusammensetzung enthalten ist.

Die Glykolkomponente ist in ungefähr stöchiometrischer Menge anwesend.

Die für die Zwecke der Erfindung geeigneten Copolyester zeichnen sich weiterhin dadurch aus, dass sie eine Säurezahl unter 10, vorzugsweise von 0 bis 3, ein mittleres Mol-Gewicht unter etwa 50.000 und einen SV-Wert im Bereich von etwa 30 bis 700, vorzugsweise etwa 350 bis 650, aufweisen.

Die Unteransprüche geben bevorzugte Ausführungsformen der Erfindung an, welche nachstehend zusätzlich erläutert werden.

Erfindungsgemäß ist die Folie zumindest zweischichtig (ohne die Copolyesterbeschichtung). Sie umfaßt dann als Schichten eine Schicht B und die Schicht A. In einer bevorzugten Ausführungsform der Erfindung ist die Folie dreischichtig aufgebaut und weist auf der einen Seite der Schicht B (=Basisschicht) die Schicht A und auf der anderen Seite der Schicht B eine weitere Schicht C aus Polyethylenterephthalat auf, die die für die Herstellung und Verarbeitung der Folie förderlichen Pigmente enthält. In diesem Fall bilden die beiden Schichten A und C die Deckschichten A und C.

Für die Materialien der verschiedenen Schichten können prinzipiell verschiedene Rohstoffe verwendet werden. Es ist jedoch bevorzugt, die einzelnen Schichten auf Basis von Polyesterrohstoffen herzustellen.

Die Basisschicht B der Folie besteht bevorzugt zu mindestens 90 Gew.-% aus einem thermoplastischen Polyester. Dafür geeignet sind Polyester aus Ethylenglykol und Terephthalsäure (=Polyethylenterephthalat, PET), aus Ethylenglykol und Naphthalin-2,6-dicarbonsäure (=Polyethylen-2,6-naphthalat, PEN), aus 1,4-Bis-hydroximethylcyclohexan und Terephthalsäure [=Poly(1,4cyclohexandimethylenterephthalat, PCDT) sowie aus Ethylenglykol, Naphthalin-2,6-dicarbonsäure und Biphenyl-4,4'-dicarbonsäure (= Polyethylen-2,6-naphthalatbibenzoat, PENBB). Besonders bevorzugt sind Polyester, die zu mindestens 90 mol-%, bevorzugt mindesten 95 mol-%, aus Ethylenglykol- und Terephthalsäure-Einheiten oder aus Ethylenglykol- und Naphthalin-2,6-dicarbonsäure-Einheiten bestehen. Die restlichen Monomereinheiten stammen ais anderen aliphatischen, cycloaliphatischen oder aromatischen Diolen bzw. Dicarbonsäure, wie sie auch in der Schicht A (oder der Schicht C) vorkommen können.

Geeignete andere aliphatische Diole sind beispielsweise Diethylenglykol, Triethylenglykol, aliphatische Glykole der allgemeinen Formel $HO-(CH_2)_n-OH$, wobei n eine ganze Zahl von 3 bis 6 darstellt (insbesondere Propan-1,3-diol, Butan-1,4-diol, Pentan-1,5-diol und Hexan-1,6-diol) oder verzweigte aliphatische Glykole mit bis zu 6 Kohlenstoff-Atomen. Von den cycloaliphatischen Diolen sind Cyclohexandiole (insbesondere Cyclohexan-1,4-diol) zu nennen. Geeignete andere aromatische Diole entsprechen beispielsweise der Formel $HO-C_6H_4-X-C_6H_4-OH$, wobei X für $-CH_2-$, $-C(CH_3)_2-$, $-C(CF_3)_2-$, -O-, -S- oder $SO_2$ steht. Daneben sind aus Bisphenole der Formel $HO-C_6H_4-C_6H_4-OH$ gut geeignet.

Andere aromatische Dicarbonsäuren sind bevorzugt Benzoldicarbonsäuren, Naphthalindicarbonsäuren (beispielsweise Naphthalin-1,4- oder 1,6-dicarbonsäure), Biphenyl-x,x'-dicarbonsäuren (insbesondere Biphenyl-4,4'-dicarbonsäure), Diphenylacetylen-x,x'-dicarbonsäuren (insbesondere Diphenylacetylen-4,4'-dicarbonsäure) oder Stilben-x,x'-dicarbonsäuren. Von den cycloaliphatischen Dicarbonsäuren sind Cyclohexandicarbonsäuren (insbesondere Cyclohexan-1,4-dicarbonsäure) zu nennen. Von den aliphatischen Dicarbonsäuren sind die ($C_3$-$C_{19}$) Alkandisäuren besonders geeignet, wobei der Alkanteil geradkettig oder verzweigt sein kann.

Die Herstellung der Polyester kann nach dem Umesterungsverfahren erfolgen. Dabei geht man von Dicarbonsäureestern und Diolen aus, die mit den üblichen Umesterungskatalysatoren, wie Zink-, Calcium-, Lithium-, Magnesium- und Mangan-Salzen, umgesetzt werden. Die Zwischenprodukte werden dann in Gegenwart allgemein üblicher Polykondensationskatalysatoren, wie Antimontrioxid oder Titan-Salzen, polykondensiert. Die Herstellung kann ebenso gut nach dem Direktveresterungsverfahren in Gegenwart von Polykondensationskatalysatoren erfolgen. Dabei geht man direkt von den Dicarbonsäuren und den Diolen aus.

Für die Schicht A können prinzipiell die gleichen Polymere verwendet werden, wie für die Basisschicht. Daneben können in der Schicht A auch andere Materialien enthalten sein, wobei dann die Schicht A bevorzugt aus einem Gemisch von Polymeren, einem Copolymeren oder einem Homopolymeren besteht, welches Ethylen-2,6-naphthalat-Einheiten und Ethylen-terephthalat-Einheiten enthalten. Bis zu 10 Mol-% der Polymere können aus weiteren Comonomeren (s.o.) bestehen.

Für die andere Schicht (Deckschicht C) oder für eventuell vorhandene Zwischenschichten können prinzipiell die gleichen Polymere verwendet werden, wie zuvor für die Basisschicht B und die Schicht A beschrieben wurde.

Die Basisschicht und die andere(n) Schicht(en) können zusätzlich übliche Additive, wie bspw. Stabilisatoren und/oder Antiblockmittel, enthalten. Sie werden zweckmäßig dem Polymer bzw. der Polymermischung bereits vor dem Aufschmelzen zugesetzt. Als Stabilisatoren werden beispielsweise Phosphorverbindungen, wie Phosphorsäure oder Phosphorsäureester, eingesetzt.

Typische Antiblockmittel (in diesem Zusammenhang auch als Pigmente bezeichnet) sind anorganischen und/oder organische Partikel, beispielsweise Calciumcarbonat, amorphe Kieselsäure, Talk, Magnesiumcarbonat, Bariumcarbonat, Calciumsulfat, Bariumsulfat, Lithiumphosphat, Calciumphosphat, Magnesiumphosphat, Aluminiumoxid, LiF, Calcium-, Barium-, Zink- oder Mangan-Salze der eingesetzten Dicarbonsäuren, Ruß, Titandioxid, Kaolin oder vernetzte Polystyrol- oder Arcrylat-Partikel.

Als Antiblockmittel können auch Mischungen von zwei und mehr verschiedenen Antiblockmitteln oder Mischungen von Antiblockmitteln gleicher Zusammensetzung, aber unterschiedlicher Partikelgröße gewählt werden. Die Partikel können den einzelnen Schichten in den jeweils vorteilhaften Konzentrationen, z.B. als glykolische Dispersion während der Polykondensation oder über Masterbatche bei der Extrusion zugegeben werden. Als besonders geeignet haben sich Pigmentkonzentrationen von 0 bis 5 Gew.-% erwiesen. Eine detaillierte Beschreibung der einsetzbaren Antiblockmittel findet sich beispielsweise in der EP-A-0 602 964.

Die erfindungsgemäße Schicht A wird zu Erfüllung der Gleichungen (1) bis (2) im allgemeinen nur wenig oder überhaupt nicht mit inerten Pigmenten gefüllt. Die Konzentration der inerten Partikel in der Schicht A ist weniger als 0,06 Gew.-%, vorzugsweise zwischen 0 und 0,05 Gew.-% und ganz bevorzugt zwischen 0 und 0,04 Gew.-% und richtet sich im wesentlichen nach der Größe der eingesetzten Partikeln. Bevorzugte Partikel sind $SiO_2$ in kolloidaler und in kettenartiger Form. Die Partikeldurchmesser der eingesetzten Teilchen sind prinzipiell nicht eingeschränkt. Für die Lösung der Aufgabe hat es sich jedoch als günstig erwiesen, Teilchen mit einem mittleren Primärpartikeldurchmesser von kleiner als 60 nm, bevorzugt kleiner als 55 nm und besonders bevorzugt kleiner als 50 nm und/oder Teilchen mit einem mittleren Primärpartikeldurchmesser von größer als 1 μm, bevorzugt größer als 1,5 μm und besonders bevorzugt größer als 2 μm zu verwenden.

Die Pigmentierung der einzelnen, die Schicht A nicht betreffende Schichten kann danach sehr verschieden

sein und richtet sich im wesentlichen nach dem Folienaufbau (Schichtaufbau) und den Anforderungen der Folie hinsichtlich Erzielung der weiteren optischen Eigenschaften (Trübung) und dem Herstellungs- und Verarbeitungsverhalten.

Handelt es sich beispielsweise um die bevorzugte dreischichtige Folie mit der Basisschicht B und den beiden Deckschichten A und C, so ist in der Basisschicht B die Partikelkonzentration vorzugsweise niedriger als in der zweiten Deckschicht C. Bei einer dreischichtigen Folie vom genannten Typ wird in der Basisschicht B die Partikelkonzentration zwischen 0 und 0,06 Gew.-%, vorzugsweise zwischen 0 und 0,04 Gew.-%, insbesondere zwischen 0 und 0,03 Gew.-% und ganz bevorzugt zwischen 0 und 0,02 Gew.-% liegen. Der Partikeldurchmesser der eingesetzten Teilchen ist prinzipiell nicht eingeschränkt, jedoch sind Teilchen mit einem mittleren Durchmesser von größer 1 $\mu$m besonders bevorzugt.

Ist die Folie zweischichtig aufgebaut, wobei z.B. die Schicht A mehr als 50 %, insbesondere mehr als 65 % und besonders bevorzugt mehr als 80 % der Gesamtdicke der Folie ausmacht, so kann die Schicht B durchaus stärker pigmentiert (höhere Pigmentkonzentration) werden als im anderen Fall, bei dem die Schichtdicke der Schicht A vergleichbar klein ist (< 50 %).

Die erfindungsgemäße koextrudierte Polyesterfolie ist in einer besonders bevorzugten Ausführungsform dreischichtig aufgebaut und enthält dann noch eine Schicht C. Die beiden Schichten A und C bilden dann die Deckschichten A und C. Aufbau, Dicke und Zusammensetzung der zweiten Deckschicht C können unabhängig von der bereits vorhandenen Deckschicht A gewählt werden, wobei die zweite Deckschicht ebenfalls die bereits genannten Polymere oder Polymermischungen enthalten kann, welche aber nicht mit denen der ersten Deckschicht identisch sein müssen. Die zweite Deckschicht kann auch andere gängige Deckschichtpolymere enthalten. Diese zweite Deckschicht enthält im allgemeinen mehr Pigmente (d.h. höhere Pigmentkonzentrationen) als die erste Deckschicht A. Die Pigmentkonzentration in dieser zweiten Deckschicht liegt zwischen 0,02 und 0,6 %, vorteilhaft zwischen 0,025 und 0,5 %, insbesondere zwischen 0,03 und 0,4 % und ganz besonders bevorzugt zwischen 0,035 und 0,3 %. Sie richtet sich z.B. nach dem gewünschten Verarbeitungsverhalten der Folie. Vorzugsweise wird/werden die Pigmentart/en, die Pigmentkonzentration/en und die Partikelkonzentration/en als auch die Schichtdickenverhältnisse so gewählt, dass eine gute Optik, sowie eine gute Herstellbarkeit und Verarbeitbarkeit der Folie gegeben ist.

Es hat sich als günstig erwiesen, die Seite C durch die folgenden Parameter zu beschreiben

a) mittlere Rauhigkeit $R_{a,C}$
b) Haft-/Gleitreibung $\mu_C$ dieser Seite gegen sich selbst und durch die
c) Anzahl der Erhebungen $N_C/mm^2$.

Vorteilhaft ist es, wenn die Folie so ausgebildet ist, dass auf dieser Deckschicht A gegenüberliegenden Oberfläche C (oder B, bei einer zweischichtigen Folie)

a) der $R_a$-Wert zwischen 20 und 150 nm
b) die Haft-/Gleitreibung $\mu_C$ dieser Schicht gegen sich selbst kleiner als 0,6 und
c) die Anzahl der Erhebungen $N_C/mm^2$ durch die Gleichungen

$$A_{h2} - B_{h2} * \log h/\mu m < N_C/mm^2 < A_{h3} - B_{h3} * \log h/\mu m \quad (3)$$

$$0{,}05\ \mu m < h < 1{,}0\ \mu m$$

$$A_{h2} = -1{,}000; \qquad B_{h2} = 3{,}70$$

$$A_{h3} = 2{,}477; \qquad B_{h3} = 2{,}22$$

$$A_{d2} - B_{d2} * \log d/\mu m < N_C/mm^2 < A_{d3} - B_{d3} * \log d/\mu m \quad (4)$$

$$0{,}2\ \mu m < d < 10{,}0\ \mu m$$

$$A_{d2} = 1{,}700; \qquad B_{d2} = 3{,}86$$

$$A_{d3} = 4{,}700; \qquad B_{d3} = 2{,}70$$

ausgedrückt wird.

In einer bevorzugten Ausführungsform liegt der $R_a$-Wert zwischen 30 und 100 nm und insbesondere zwischen 35 und 80 nm.

In einer bevorzugten Ausführungsform ist die Haft-/Gleitreibung $\mu_C$ dieser Schicht gegen sich selbst kleiner als 0,55 und insbesondere kleiner als 0,50.

In einer bevorzugten Ausführungsform besitzen die Konstanten $A_{h2}$ bis $B_{h3}$ der Gleichung (3) die Werte $A_{h2}$ = -0,523, $B_{h2}$ = 3,523, $A_{h3}$ = 2,300 und $B_{h3}$ = 2,3, in einer besonders bevorzugten Ausführungsform die Werte $A_{h2}$ = 0,00, $B_{h2}$ = 3,300, $A_{h3}$ = 2,000 und $B_{h3}$ = 2,400 und ganz besonders bevorzugt die Werte $A_{h2}$ = 1,420, $B_{h2}$ = 2,500, $A_{h3}$ = 2,000 und $B_{h3}$ = 3,000.

In einer bevorzugten Ausführungsform besitzen die Konstanten $A_{d2}$ bis $B_{d2}$ der Gleichung (4) die Werte $A_{d2}$ = 2,00, $B_{d2}$ = 3,630, $A_{d3}$ = 4,40 und $B_{d3}$ = 2,70, in einer besonders bevorzugten Ausführungsform die Werte $A_{d2}$ = 2,400, $B_{d2}$ = 3,720, $A_{d3}$ = 4,000 und $B_{d3}$ = 2,600 und ganz besonders bevorzugt die Werte $A_{d2}$ = 3,400, $B_{d2}$ = 2,400, $A_{d3}$ = 4,000 und $B_{d3}$ = 3,300.

Zwischen der Basisschicht und den Deckschicht(en) kann sich gegebenenfalls noch eine Zwischenschicht befinden. Diese kann wiederum aus den für die Basisschicht beschriebenen Polymeren bestehen. In einer besonders bevorzugten Ausführungsform besteht sie aus dem für die Basisschicht verwendeten Polyester. Sie kann auch die beschriebenen üblichen Additive enthalten. Die Dicke der Zwischenschicht ist im allgemeinen größer als 0,3 μm und liegt vorzugsweise im Bereich von 0,5 bis 15 μm, insbesondere im Bereich von 1,0 bis 10 μm und ganz besonders bevorzugt im Bereich von 1,0 bis 5 μm.

Bei der besonders vorteilhaften dreischichtigen Ausführungsform der erfindungsgemäßen Folie ist die Dicke der Deckschicht(en) A (und C) im allgemeinen größer als 0,1 μm und liegt allgemein im Bereich von 0,2 bis 3,0 μm, vorteilhaft im Bereich von 0,2 bis 2,5 μm, insbesondere im Bereich von 0,3 bis 2 μm und ganz besonders bevorzugt im Bereich von 0,3 bis 1,5 μm, wobei die Deckschichten A und C gleich oder verschieden dick sein können.

Die Gesamtdicke der erfindungsgemäßen Polyesterfolie kann innerhalb weiter Grenzen variieren und richtet sich nach dem beabsichtigten Verwendungszweck. Sie beträgt 4 bis 50 μm, insbesondere 5 bis 45 μm, vorzugsweise 6 bis 40 μm, wobei die Schicht B einen Anteil von vorzugsweise etwa 5 bis 90 % an der Gesamtdicke hat.

Zur Herstellung der Schichten A und C (Deckschicht/en A und C) werden zweckmäßig Granulate aus Polyethylenterephthalat einem bzw. zwei Extrudern zugeführt. Die Materialien werden bei etwa 300 °C aufgeschmolzen und extrudiert.

Die Polymere für die Basisschicht B werden zweckmäßig über einen weiteren Extruder zugeführt. Etwa vorhandene Fremdkörper oder Verunreinigungen lassen sich aus der Polymerschmelze vor der Extrusion abfiltrieren. Die Schmelzen werden dann in einer Mehrschichtdüse zu flachen Schmelzefilmen ausgeformt und übereinander geschichtet. Anschließend wird der Mehrschichtfilm mit Hilfe einer Kühlwalze und gegebenenfalls weiteren Walzen abgezogen und verfestigt.

Die biaxiale Verstreckung wird im allgemeinen sequentiell durchgeführt. Dabei wird vorzugsweise erst in Längsrichtung (d.h. in Maschinenrichtung) und anschließend in Querrichtung (d.h. senkrecht zur Maschinenrichtung) verstreckt. Dies führt zu einer Orientierung der Molekülketten. Das Verstrecken in Längsrichtung läßt sich mit Hilfe zweier entsprechend dem angestrebten Streckverhältnis verschieden schnell laufenden Walzen durchführen. Zum Querverstrecken benutzt man allgemein einen entsprechenden Kluppenrahmen.

Die Temperatur, bei der die Verstreckung durchgeführt wird, kann in einem relativ großen Bereich variieren und richtet sich nach den gewünschten Eigenschaften der Folie. Im allgemeinen wird die Längsstreckung bei 80 bis 130 °C und die Querstrekkung bei 90 bis 150 °C durchgeführt. Das Längsstreckverhältnis liegt im allgemein im Bereich von 2,5:1 bis 6:1, bevorzugt von 3:1 bis 5,5:1. Das Querstreckverhältnis liegt allgemein im Bereich von 3,0:1 bis 5,0:1, bevorzugt von 3,5:1 bis 4,5:1.

Bei der nachfolgenden Thermofixierung wird die Folie etwa 0,1 bis 10 s lang bei einer Temperatur von 150 bis 250 °C gehalten. Anschließend wird die Folie in üblicher Weise aufgewickelt.

Die Copolyesterbeschichtung in Form einer wäßrigen Dispersion kann in jedem Stadium der Folienherstellung in-line aufgebracht werden. In einer besonderen Ausführungsform wird die Beschichtung nach der Längsstreckung, jedoch vor der Querstreckung auf die Folienoberfläche A aufgebracht. Besonders bevorzugt ist dabei die Aufbringung der Dispersion mittels des "Reverse gravure-roll coatings" - Verfahrens, bei dem sich die Beschichtungen äußerst homogen in den gewünschten Schichtdicken (5 bis 100 nm) auftragen lassen. Die Beschichtung verleiht der Folienoberfläche die zusätzliche gewünschte Funktion, d.h. sie verbessert deutlich die Haftung zu den aufgedampften Metallen.

Die genannte Copolyesterbeschichtung wird vorzugsweise als wässrige Dispersion auf die Folienoberfläche A aufgebracht, und anschließend wird das Dispergiermittel verflüchtigt. Wird die Beschichtung vor der Querstreckung aufgebracht, reicht gewöhnlich die Temperaturbehandlung in der Querstreckung aus um das Dispergiermittel zu verflüchtigen und die Beschichtung zu trocknen. Die getrocknete Beschichtung hat dann eine Schichtdicke von 5 bis 100 nm, bevorzugt 20 bis 70 nm, insbesondere 30 bis 50 nm.

Die biaxial verstreckte und thermofixierte Polyesterfolie kann vor der Bedruckung oder vor dem Aufbringen der metallischen Schicht auf einer oder beiden Seite(n) corona- oder flammbehandelt werden. Die Behandlungsintensität ist so gewählt, dass die Oberflächenspannung der Folie im allgemeinen über 50 mN/m liegt.

Sofern erwünscht, erfolgt das Aufbringen der Metallschicht auf üblichen industriellen Anlagen. Metallschichten aus Aluminium werden üblicherweise durch Bedampfen in herkömmlichen Metallisierern (Schiffchenmethode) hergestellt. Die Verfahrensparameter der Anlage beim Aufbringen der Metallschicht auf die Folien entsprechen den Standardbedingungen. Die Metallisierung der Folien wird vorzugsweise so durchgeführt, dass die optische Dichte der metallisierten Folien im üblichen Bereich von ca. 2,2 bis 3,0 liegt. Die Bahngeschwindigkeit der zu beschichtenden Folie liegt bei allen Einstellungen üblicherweise zwischen 5 und 20 m/s.

Zur Einstellung weiterer gewünschter Eigenschaften kann die Folie corona- bzw. flammvorbehandelt sein.

Ein Vorteil der Erfindung besteht darin, dass die Herstellungskosten der erfindungsgemäßen Folie vergleichbar sind mit denjenigen nach dem Stand der Technik. Die sonstigen verarbeitungs- und gebrauchsrelevanten Eigenschaften der erfindungsgemäßen Folie bleiben im wesentlichen unverändert oder sind sogar verbessert. Daneben ist bei der Herstellung der Folie gewährleistet, dass das Regenerat in einer Konzentration von 20 bis 60 Gew.-% bezogen auf das Gesamtgewicht der Folie, wieder verwendet werden kann, ohne dass dabei die physikalischen Eigenschaften der Folie nennenswert negativ beeinflußt werden.

Die Folie eignet sich hervorragend zur Verpackung von licht- und/oder luftempfindlichen Nahrung- und Genußmitteln. Speziell geeignet ist sie zur Herstellung von Vakuumverpackungen für Kaffee, insbesondere gemahlenem Kaffee.

Zusammengefaßt zeichnet sich die erfindungsgemäße koextrudierte und beschichtete Folie durch einen hohen Glanz und durch eine niedrige Trübung aus. Des weiteren besitzt die Folie eine niedrige Sauerstoffpermeation, nachdem sie auf der beschichteten Folienoberfläche A metallisiert worden ist. Die Haftung zwischen der aufgedampften Metallschicht und der Folie ist ausgezeichnet. Außerdem besitzt die Folie ein gutes Wickel- und Verarbeitungsverhalten.

Der Glanz der Folienoberfläche A ist größer als 160. In einer bevorzugten Ausführungsform beträgt der Glanz dieser Seite mehr als 170 und in einer besonders bevorzugten Ausführungsform mehr als 180.

Die Trübung der Folie ist kleiner als 2,5. In einer bevorzugten Ausführungsform beträgt die Trübung der Folie weniger als 2,2 und in einer besonders bevorzugten Ausführungsform weniger als 2,0.

Die Folie besitzt eine Sauerstoffpermeation von kleiner als 1,2 $cm^3 m^{-2} d^{-1} bar^{-1}$, vorzugsweise kleiner als 1,0 $cm^3 m^{-2} d^{-1} bar^{-1}$ und besonders bevorzugt kleiner als 0,9 $cm^3 m^{-2} d^{-1} bar^{-1}$, nachdem sie auf der mit einem Copolyester beschichteten Folienoberfläche A metallisiert worden ist.

Die Folie besitzt eine Metallhaftung von größer als 2,0 N/15 mm, bevorzugt größer als 2,4 N/15 mm und ganz bevorzugt größer als 2,8 N/15 mm.

Der Reibungskoeffizient auf der zu A-Seite gegenüberliegenden Seite ist kleiner als 0,6. In einer bevorzugten Ausführungsform beträgt der Reibungskoeffizient der Folie dort weniger als 0,55 und in einer besonders bevorzugten Ausführungsform weniger als 0,5.

Die nachstehende Tabelle (Tabelle 1) faßt die wichtigsten erfindungsgemäßen Folieneigenschaften noch einmal zusammen.

**Tabelle 1**

| | **erfindungsgemäßer** Bereich | **bevorzugt** | **besonders** bevorzugt | **Einheit** | Meßmethode |
|---|---|---|---|---|---|
| Glanz, Seite A (Meßwinkel 20°)[1)] | > 160 | > 170 | > 180 | | DIN 67 530 |
| Trübung[1)] | < 2,5 | < 2,2 | < 2,0 | % | ASTM-D 1003-52 |
| Sauerstoffpermeation der metallisierten Folie | < 1,2 | < 1,0 | < 0,90 | $cm^3 m^{-2} d^{-1} bar^{-1}$ | DIN 53 380, Teil 3 |
| Haftung zwischen der Folienoberfläche A und der Metallschicht | > 2,0 | > 2,4 | > 2,8 | N/15 mm | EAA-Peel-Test |
| Reibungskoeffizient: C- bzw. B-Seite gegen sich selbst | < 0,6 | < 0,55 | < 0,50 | | DIN 53 375 |

(fortgesetzt)

| | erfindungsgemäßer Bereich | bevorzugt | besonders bevorzugt | Einheit | Meßmethode |
|---|---|---|---|---|---|
| mittlere Rauhigkeit $R_a$ C- bzw. B-Seite | 20 - 150 | 30 - 100 | 35 - 80 | nm | DIN 4768, bei einem Cut-off von 0,25 mm |
| [1]) Gemessen an der metallisierten Folie | | | | | |

Zur Charakterisierung der Rohstoffe und der Folien wurden die folgenden Methoden benutzt:

(1) **Optische Dichte**

Zur Messung der optischen Dichte wurde das Densitometer Macbeth TD-904 von Macbeth (Division of Kollmorten Instruments Corp.) eingesetzt. Die optische Dichte ist definiert als OD = - lg $I/I_0$, wobei I: die Intensität des eingestrahlten Lichtes, $I_0$: die Intensität des ausgestrahlten Lichts und $I/I_0$: die Transmission bedeuten.

(2) **Sauerstoffpermeation**

Die Messung der Sauerstoffpermeation an den metallisierten Folien erfolgte mit einem OX-TRAN 2/20 von Mocon Modern Controls (USA) entsprechen DIN 53 380, Teil 3.

(3) **SV-Wert**

Zur Bestimmung des SV-Wertes (SV = solution viscosity) wurde eine Polyester-Probe in einem Lösungsmittel (Dichloressigsäure) gelöst. Die Viskosität dieser Lösung sowie die Viskosität des reinen Lösungsmittels wurden in einem Ubbelohde-Viskosimeter gemessen. Aus den beiden Werten wurde der Quotient ermittelt, davon 1,000 abgezogen und dieser Wert mit 1000 multipliziert. Das Resultat war der SV-Wert ("solution viscosity").

(4) **Reibung**

Die Reibung wurde nach DIN 53 375 bestimmt. Die Reibung wurde 14 Tage nach der Produktion gemessen. Ein Verblocken findet statt, wenn der Reibwert größer als 1 ist oder bei der Reibkraftmessung in der Reibkraft-Weg-Verlauf Messung Unstetigkeitsstellen auftreten.

(5) **Trübung**

Die Trübung der Folie wurde nach ASTM-D 1003-52 gemessen. Die Trübungsmessung nach Hölz wurde in Anlehnung an ASTM-D 1003-52 bestimmt. Wobei jedoch zur Ausnutzung des optimalen Meßbereichs an vier übereinanderliegenden Folienlagen gemessen und anstelle einer 4°-Lochblende eine 1 °-Spaltblende eingesetzt wurde.

(6) **Glanz**

Der Glanz wurde nach DIN 67 530 bestimmt. Gemessen wurde der Reflektorwert als optische Kenngröße für die Oberfläche einer Folie. Angelehnt an die Normen ASTM-D 523-78 und ISO 2813 wurde der Einstrahlwinkel mit 20° oder 60° eingestellt. Ein Lichtstrahl trifft unter dem eingestellten Einstrahlwinkel auf die ebene Prüffläche und werden von dieser reflektiert bzw. gestreut. Die auf den photoelektronischen Empfänger auffallenden Lichtstrahlen werden als proportionale elektrische Größe angezeigt. Der Meßwert ist dimensionslos und muß mit dem Einstrahlwinkel angegeben werden.

(7) **Bestimmung der Korngrößen auf Folienoberflächen**

Die Bestimmung der Größenverteilung von Erhebungen auf Folienoberflächen erfolgt mit einem Rasterelektronenmikroskop und einem Bildanalysesystem. Verwendet wird das Rasterelektronenmikroskop XL30 CP der Fa. Philips mit einem integrierten Bildanalyseprogramm AnalySIS der Fa. Soft-Imaging System.

Für diese Messungen werden Folienproben flach auf einen Probenhalter aufgebracht. Anschließend werden diese unter einem Winkel α mit einer dünnen Metallschicht (z.B. aus Silber) schräg bedampft. Dabei ist α der Winkel

zwischen Probenoberfläche und der Ausbreitungsrichtung des Metalldampfes. Durch diese Schrägbedampfung entsteht hinter der Erhebung ein Schattenwurf. Da die Schatten noch nicht elektrisch leitfähig sind, wird die Probe anschließend noch mit einem zweiten Metall (z.B. Gold) bedampft oder gesputtert, wobei die zweite Beschichtung senkrecht auf die Probenoberfläche auftrifft und somit bei der zweiten Beschichtung keine Schatten entstehen.

Die so präparierten Probenoberflächen werden in einem Rasterelektronenmikroskop (REM) abgebildet. Die Schatten der Erhebungen sind infolge des Materialkontrastes der Metalle sichtbar. Die Probe wird im REM so orientiert, dass die Schatten parallel zu einem Bildrand verlaufen. Für die Bildaufnahme werden folgende Bedingungen am REM eingestellt: Sekundärelektronendetektor, Arbeitsabstand 10 mm, Beschleunigungsspannung 10 kV und Spot 4,5. Die Helligkeit und der Kontrast werden so eingestellt, dass sämtliche Bildinformationen als Grauwerte dargestellt werden und die Intensität des Grundrauschens so klein ist, dass er nicht als Schatten detektiert wird. Die Länge der Schatten wird mit dem Bildanalyse ausgemessen. Der Schwellwert für die Schattenerkennung wird auf die Stelle gelegt, wo die 2. Ableitung der Grauwertverteilung des Bildes den Nullpunkt durchquert. Vor der Schattenerkennung wird das Bild mit einem NxN-Filter (Größe 3, 1 Iteration) geglättet. Durch die Setzung eines Rahmens ("frame") wird sichergestellt, dass Erhebungen, die im Bild nicht vollständig abgebildet werden, nicht mitgemessen werden. Die Vergrößerung, die Rahmengröße und die Anzahl der ausgewerteten Bildern werden so gewählt, dass insgesamt 0,36 $mm^2$ Folienoberfläche ausgewertet werden.

Die Höhe der einzelnen Erhebungen wird aus den einzelnen Schattenlängen mit folgender Beziehung errechnet:

$$h = (\tan \alpha) * L$$

wobei h die Höhe der Erhebung, $\alpha$ der Bedampfungswinkel und L die Schattenlänge ist. Die so ermittelten Erhebungen werden in Klassen eingeteilt um zu einer Häufigkeitsverteilung zu kommen. Die Einteilung erfolgt in 0,05 $\mu$m-breite Klassen zwischen 0 und 1 $\mu$m, wobei die kleinste Klasse (0 bis 0,05 $\mu$m) für weitere Auswertungen nicht verwendet wird. Die Durchmesser (Ausbreitung senkrecht zur Schattenwurfsrichtung) der Erhebungen werden in ähnlicher Weise in 0,2 $\mu$m-breite Klassen von 0 bis 10 $\mu$m eingestuft, wobei auch hier die kleinste Klasse für die weitere Auswertung nicht verwendet wird.

(8) **Rauhigkeit**

Die Rauhigkeit $R_a$ der Folie wurde nach DIN 4768 bei einem Cut-off von 0,25 mm bestimmt.

(9) **Metallhaftung**

Die Metallhaftung wurden in Anlehnung an den Fraunhofer EAA-Peel-Test durchgeführt. Diese Prüfung ist detailliert beschrieben in "Coating 12/97, Seite 446-450".

**Beispiel 1**

Chips aus Polyethylenterephthalat (hergestellt über das Umesterungsverfahren mit Mn als Umesterungskatalysator, Mn-Konzentration: 100 ppm) wurden bei 160 °C auf eine Restfeuchte von unterhalb 100 ppm getrocknet und dem Extruder für die Basisschicht B zugeführt.

Daneben wurden Chips aus Polyethylenterephthalat (hergestellt über das Umesterungsverfahren mit Mn als Umesterungskatalysator, Mn-Konzentration: 100 ppm), die entsprechend Tabelle 2 pigmentiert sind, ebenfalls bei 160 °C auf eine Restfeuchte von unterhalb 100 ppm getrocknet und den jeweiligen Extrudern für die Deckschichten A und C zugeführt.

Es wurde durch Coextrusion und anschließende stufenweise Orientierung in Längs- und Querrichtung eine transparente dreischichtige Folie mit ABC-Aufbau und einer Gesamtdicke von 12 $\mu$m hergestellt. Die Dicke der jeweiligen Schichten ist der Tabelle 2 zu entnehmen.

Deckschicht A, Mischung aus:

| | |
|---|---|
| 98,0 Gew.-% | Polyethylenterephthalat mit einem SV-Wert von 800 |
| 2,00 Gew.-% | Masterbatch aus 99,0 Gew.-% Polyethylenterephthalat (SV-Wert von 800) und 0,5 Gew.-% Sylobloc® 44 H (kolloidales $SiO_2$ der Fa. Grace) und 0,5 Gew.-% Aerosil® TT 600 (kettenartiges $SiO_2$ der Fa. |

Degussa)

Basisschicht B:

| | |
|---|---|
| 100,0 Gew.-% | Polyethylenterephthalat mit einem SV-Wert von 800 |

Deckschicht C, Mischung aus:

| | |
|---|---|
| 84,0 Gew.-% | Polyethylenterephthalat mit einem SV-Wert von 800 |
| 16,0 Gew.-% | Masterbatch aus 99,0 Gew.-% Polyethylenterephthalat und 0,5 Gew.-% Sylobloc 44 H (Fa. Grace) und 0,5 Gew.-% Aerosil TT 600 (Fa. Degussa) |

Die Herstellungsbedingungen in den einzelnen Verfahrensschritten waren:

| | | | |
|---|---|---|---|
| Extrusion: | Temperaturen | A-Schicht: | 300 °C |
| | | B-Schicht: | 300 °C |
| | | C-Schicht: | 300 °C |
| | Düsenspaltweite: | | 1 mm |
| | Temperatur der Abzugswalze: | | 30 °C |
| Längsstreckung: | Temperatur: | | 80 - 125 °C |
| | Längsstreckverhältnis: | | 4,0 |
| Querstreckung: | Temperatur: | | 80 - 135 °C |
| | Querstreckverhältnis: | | 4,0 |
| Fixierung: | Temperatur: | | 230 °C |
| Dauer: | | | 3 s |

Die Beschichtung von Seite A mit dem Copolyester erfolgte in Anlehnung an das Beispiel 1 der EPA 0 144 878. Der Copolyester mit ca. 90 Mol-% Isophthalsäure und 10 Mol-% des Natriumsalzes der 5-Sulfoisphthalsäure als Säurekomponente und 100 Mol-% Ethylenglykol als Glykolkomponente wurde in Wasser dispergiert, wobei wie in Beispiel 1 der EPA 0 144 878 vorgegangen wurde. Im Unterschied zu Beispiel 1 wurden jedoch nicht 11,2 g sondern lediglich 9,0 g einer 50%igen wäßrigen Dispersion von kolloidalem $SiO_2$ zugegeben. Die wässrige Dispersion wurde wie im Beispiel 1 der EPA 0 144 878 näher beschrieben nach der Längsstreckung auf die Polyesterfolie aufgebracht. Nach der Querstreckung wurde eine Folie erhalten, deren Oberfläche A eine Beschichtung mit einem Trockengewicht von ca. 0,030 $g/m^2$ enthält, was einer Schichtstärke von ca. 25 nm entspricht.

Die Folie zeichnet sich durch sehr gute optische Eigenschaften und durch ein gutes Verarbeitungsverhalten aus (vgl. Tabelle 3).

Nach Herstellung der Folie (nach diesem Beispiel 1 und auch in den VB) wurde diese auf der A-Seite in einem industriellen Metallisierer mit Aluminium unter Vakuum bedampft. Die Beschichtungsgeschwindigkeit betrug 8 m/s und die optische Dichte 2,6.

Die Folie hatte die gewünschte niedrige Sauerstoffpermeation. Der Folienaufbau und die erzielten Eigenschaften derart hergestellter Folien sind in den Tabellen 2 und 3 dargestellt.

**Vergleichsbeispiel 1**

Es wurde wie in Beispiel 1 eine dreischichtige Folie hergestellt. Im Gegensatz zu Beispiel 1 wurden jetzt für die A-Schicht die Konzentrationen der C-Schicht verwendet. Es handelt sich also um eine ABA- oder um eine CBC-Folie. Die metallisierte Variante in 12 μm Dicke hat nicht die erforderten Barrierewerte.

**Vergleichsbeispiel 2**

Es wurde eine Folie wie in Beispiel 1, jedoch ohne die Copolyesterschicht, hergestellt. Die Folie hat nicht die gewünschte Metallhaftung.

**Tabelle 2**

| Beispiel | Foliendicke µm | Folienaufbau | A B C | Pigmente in den Schichten A | B | C | mittlerer Pigmentdurchmesser A | B | C | Pigmentkonzentration A | B | C |
|---|---|---|---|---|---|---|---|---|---|---|---|---|
| Beispiel 1 | 12 | ABC | 1,5/9,0/1,5 | Sylobloc 44 H | keine | Sylobloc 44 H | 2,5 | | 2,5 | 300 | 0 | |
| VB 1 | 12 | ABA | 1,5/9,0/1,5 | Sylobloc 44 H | keine | Sylobloc 44 H | 2,5 | | 2,5 | 800 | 0 | |
| VB 2 | 12 | ABC | 1,5/9,9/1,5 | Sylobloc 44 H | keine | Sylobloc 44 H | 2,5 | | 2,5 | 300 | 0 | |

Tabelle 3

| Beispiel | Konstanten für die Höhenverteilung der Partikel A-Seite/C-Seite $A_h$ | $B_h$ | Konstanten für die Dickenverteilung der Partikel A-Seite/C-Seite $A_d$ | $B_d$ | Sauerstoffbarriere $cm^3/m^2$ bar d | Metallhaftung N/15 mm | Rauhigkeit $R_a$ A-Seite/C-Seite nm | | Glanz[1] A-Seite/C-Seite | | Trübung[1] % | Verarbeitungsverhalten |
|---|---|---|---|---|---|---|---|---|---|---|---|---|
| Beispiel 1 | 1,3/2,45 | 1,5/2,6 | 3,3/2,4 | 3,5/3,1 | 0,85 | 3,0 | 25 | 60 | 185 | 180 | 1,9 | sehr gut |
| VB 1 | 1,5/2,6 | 1,5/2,6 | 3,5/3,1 | 3,5/3,1 | 1,35 | 3,1 | 60 | 60 | 190 | 180 | 2,2 | sehr gut |
| VB 2 | 1,3/2,45 | 1,5/2,6 | 3,3/2,4 | 3,5/3,1 | 0,43 | 1,0 | 22 | 60 | 190 | 180 | 1,8 | sehrgut |

i) Gemessen an der nicht metallisierten Folie
A-Seite: metallisierte Deckschicht
C-Seite: unmetallisierte Deckschicht

## Patentansprüche

1. Biaxial orientierte, coextrudierte, mindestens zweischichtige Polyesterfolie mit einer Basisschicht B, die zu mindestens 80 Gew.-% aus einem thermoplastischen Polyester besteht und mindestens einer weiteren auf die Basisschicht B aufgebrachten Schicht, wobei mindestens eine äußere Schicht A

   i) eine Anzahl von Erhebungen N pro $mm^2$ Folienoberfläche aufweist, die mit ihren jeweiligen Höhen h und Durchmesser d über folgende Gleichungen korreliert sind

$$\log N/mm^2 < A_h - B_h * \log h/\mu m, \qquad 0{,}05\ \mu m < h < 1{,}0\ \mu m \qquad (1)$$
$$A_h = 1{,}4; \qquad B_h = 2{,}5$$

$$\log N/mm^2 < A_d - B_d * \log d/\mu m \qquad 0{,}2\ \mu m < d < 10{,}0\ \mu m \qquad (2)$$
$$A_d = 3{,}4; \qquad B_d = 2{,}4$$

   und
   ii) eine Copolyesterbeschichtung trägt, die aus dem Kondensationsprodukt der folgenden Monomeren bzw. deren zur Bildung von Polyestern befähigten Derivaten besteht:

      A) 65 bis 95 Mol-% Isophthalsäure;
      B) 0 bis 30 Mol-% wenigstens einer aliphatischen Dicarbonsäure mit der Formel

      $HOOC(CH_2)_nCOOH$,

      wobei n im Bereich von 1 bis 11 liegt;
      C) 5 bis 15 Mol-% wenigstens eines Sulfomonomeren enthaltend eine Alkalimetallsulfonatgruppe an einem aromatischen Teil einer Dicarbonsäure;
      D) die zur Bildung von 100 Mol-% Kondensat notwendige stöchiometrische Menge eines copolymerisierbaren aliphatischen oder cycloaliphatischen Glykols mit 2 bis 11 Kohlenstoffatomen;

   wobei die Prozentangaben jeweils bezogen sind auf die Gesamtmenge der die Polyesterbeschichtung bildenden Monomeren; und
   iii) die Schicht A weniger als 0,06 Gew.-% eines inerten Füllmaterials enthält.

2. Polyesterfolie nach Anspruch 1, **dadurch gekennzeichnet, dass** die äußere Schicht A eine Dicke von 0,1 bis 3,0 µm aufweist.

3. Polyesterfolie nach einem oder mehreren der Ansprüche 1 bis 2, **dadurch gekennzeichnet, dass** die Folie zweischichtig aufgebaut ist und aus der Basisschicht B und der Deckschicht A besteht.

4. Polyesterfolie nach einem oder mehreren der Ansprüche 1 bis 3, **dadurch gekennzeichnet, dass** die Folie dreischichtig aufgebaut ist und aus einer äußeren Deckschicht A, der Basisschicht B und einer zweiten Deckschicht C besteht, welche auf der der Deckschicht A gegenüberliegenden Seite der Basisschicht B aufgebracht ist.

5. Polyesterfolie nach Anspruch 4, **dadurch gekennzeichnet, dass** die Deckschicht C pigmentiert ist.

6. Polyesterfolie nach einem oder mehreren der Ansprüche 1 bis 5, **dadurch gekennzeichnet, dass** die Deckschicht A pigmentiert ist.

7. PET-Folie nach einem oder mehreren der Ansprüche 1 bis 6, **dadurch gekennzeichnet, dass** die Folie auf mindestens einer Oberfläche metallisiert ist.

8. Polyesterfolie nach Anspruch 7, **dadurch gekennzeichnet, dass** die metallisierte Folie eine Sauerstoffpermeation

von ≤ 1,2 $cm^3/m^2$ bar d aufweist.

**9.** Polyesterfolie nach einem der Ansprüche 7 oder 8, **dadurch gekennzeichnet, dass** die metallisierte Folie eine Sauerstoffpermeation von ≤ 1,0 $cm^3/m^2$ bar d aufweist.

**10.** Verfahren zur Herstellung einer biaxial orientierten, mehrschichtigen Polyesterfolie gemäß Anspruch 1, bei dem Polyesterschmelzen entsprechend den Zusammensetzungen der Deck- und Basisschichten einer Mehrschichtdüse zugeführt werden, aus dieser auf eine Abkühlwalze extrudiert werden und die so erhaltene Vorfolie anschließend biaxial verstreckt und hitzefixiert wird, wobei mindestens eine äußere Deckschicht A

i) eine Anzahl von Erhebungen N pro $mm^2$ Folienoberfläche aufweist, die mit ihren jeweiligen Höhen h und Durchmesser d über folgende Gleichungen korreliert sind

$$\log N/mm^2 < A_h - B_h * \log h/\mu m, \quad 0{,}05\ \mu m < h < 1{,}0\ \mu m \quad (1)$$
$$A_h = 1{,}4; \quad B_h = 2{,}5$$

$$\log N/mm^2 < A_d - B_d * \log d/\mu m \quad 0{,}2\ \mu m < d < 10{,}0\ \mu m \quad (2)$$
$$A_d = 3{,}4; \quad B_d = 2{,}4$$

und
ii) eine Copolyesterbeschichtung trägt, die aus dem Kondensationsprodukt der folgenden Monomeren bzw. deren zur Bildung von Polyestern befähigten Derivaten besteht:

A) 65 bis 95 Mol-% Isophthalsäure;
B) 0 bis 30 Mol-% wenigstens einer aliphatischen Dicarbonsäure mit der Formel

$$HOOC(CH_2)_nCOOH,$$

wobei n im Bereich von 1 bis 11 liegt;
C) 5 bis 15 Mol-% wenigstens eines Sulfomonomeren enthaltend eine Alkalimetallsulfonatgruppe an einem aromatischen Teil einer Dicarbonsäure;
D) die zur Bildung von 100 Mol-% Kondensat notwendige stöchiometrische Menge eines copolymerisierbaren aliphatischen oder cycloaliphatischen Glykols mit 2 bis 11 Kohlenstoffatomen;

wobei die Prozentangaben jeweils bezogen sind auf die Gesamtmenge der die Polyesterbeschichtung bildenden Monomeren; und
iii) die Schicht A weniger als 0,06 Gew.-% eines inerten Füllmaterials enthält.

**11.** Verfahren zur Herstellung einer biaxial orientierten, mehrschichtigen Polyesterfolie nach Anspruch 10, bei dem Regenerat in einer Konzentration von 10 bis 60 Gew.-%, bezogen auf das Gesamtgewicht der Folie, der Extrusionsdüse zugeführt wird.

**12.** Verwendung der Folie nach einem oder mehreren Ansprüchen 1 bis 9 zum Verpacken von Lebens- und Genußmitteln.

## Claims

**1.** A biaxially oriented coextruded polyester film having at least two layers with a base layer B at least 80% by weight of which is composed of a thermoplastic polyester and with at least one other layer applied to the base layer B, where at least one outward-facing layer A

i) has, per $mm^2$ of film surface, a number N of elevations whose respective heights h and diameters d are

correlated by the following equations

$$\log N/mm^2 < A_h - B_h * \log h/\mu m, \quad 0.05\ \mu m < h < 1.0\ \mu m \quad (1)$$
$$A_h = 1.4;\ B_h = 2.5$$

$$\log N/mm^2 < A_d - B_d * \log d/\mu m, \quad 0.2\ \mu m < d < 10.0\ \mu m \quad (2)$$
$$A_d = 3.4;\ B_d = 2.4$$

and
ii) has a copolyester coating composed of the condensation product of the following monomers and/or of their derivatives capable of forming polyesters:

A) from 65 to 95 mol% of isophthalic acid;
B) from 0 to 30 mol% of at least one aliphatic dicarboxylic acid of formula

$$HOOC(CH_2)_nCOOH,$$

where n is from 1 to 11;
C) from 5 to 15 mol% of at least one sulfo-monomer containing an alkali metal sulfonate group on an aromatic moiety of a dicarboxylic acid;
D) a copolymerizable aliphatic or cycloaliphatic glycol having 2 to 11 carbon atoms in the stoichiometric amount necessary to form 100 mol% of condensate;

where each of the percentages given is based on the total amount of the monomers forming the polyester coating; and
iii) the layer A comprises less than 0.06% by weight of an inert filler.

**2.** A polyester film as claimed in claim 1, wherein the thickness of the outward-facing layer A is from 0.1 to 3.0 μm.

**3.** A polyester film as claimed in one or more of claims 1 to 2, wherein the film is composed of two layers: the base layer B and the outer layer A.

**4.** A polyester film as claimed in one or more of claims 1 to 3, wherein the film is composed of three layers: an outward-facing outer layer A, the base layer B and a second outer layer C, which has been applied to the base layer B on its side facing away from the outer layer A.

**5.** A polyester film as claimed in claim 4, wherein the outer layer C has been pigmented.

**6.** A polyester film as claimed in one or more of claims 1 to 5, wherein the outer layer A has been pigmented.

**7.** A PET film as claimed in one or more of claims 1 to 6, at least one surface of which has been metallized.

**8.** A polyester film as claimed in claim 7, wherein the oxygen permeation of the metallized film is ≤ 1. 2 $cm^3/m^2$ bar d.

**9.** A polyester film as claimed in claim 7 or 8, wherein the oxygen permeation of the metallized film is ≤ 1.0 $cm^3/m^2$ bar d.

**10.** A process for producing a biaxially oriented, coextruded polyester film as claimed in claim 1, in which polyester melts corresponding to the compositions of the outer and base layers are fed to a coextrusion die and extruded from this onto a chill roll, and the resultant prefilm is then biaxially oriented and heat-set, where at least one outward-facing outer layer A

i) has, per $mm^2$ of film surface, a number N of elevations whose respective heights h and diameters d are correlated by the following equations

$$\log N/mm^2 < A_h - B_h * \log h/\mu m, \quad 0.05\ \mu m < h < 1.0\ \mu m \quad (1)$$
$$A_h = 1.4;\ B_h = 2.5$$

$$\log N/mm^2 < A_d - B_d * \log d/\mu m, \quad 0.2\ \mu m < d < 10.0\ \mu m \quad (2)$$
$$A_d = 3.4;\ B_d = 2.4$$

and
ii) has a copolyester coating composed of the condensation product of the following monomers and/or of their derivatives capable of forming polyesters:

A) from 65 to 95 mol% of isophthalic acid;
B) from 0 to 30 mol% of at least one aliphatic dicarboxylic acid of formula

$$HOOC(CH_2)_nCOOH,$$

where n is from 1 to 11;
C) from 5 to 15 mol% of at least one sulfo-monomer containing an alkali metal sulfonate group on an aromatic moiety of a dicarboxylic acid;
D) a copolymerizable aliphatic or cycloaliphatic glycol having 2 to 11 carbon atoms in the stoichiometric amount necessary to form 100 mol% of condensate;

where each of the percentages given is based on the total amount of the monomers forming the polyester coating; and
iii) the layer A comprises less than 0.06% by weight of an inert filler.

**11.** A process for producing a biaxially oriented, multilayer polyester film as claimed in claim 10, in which recycled material is fed to the extrusion die at a concentration of from 10 to 60% by weight, based on the total weight of the film.

**12.** The use of the film as claimed in one or more of claims 1 to 9 for packaging foods and other consumable items.

## Revendications

**1.** Film de polyester au moins bicouche, coextrudé, orienté biaxialement, comportant une couche de base B qui comprend au moins 80 % en poids d'un polyester thermoplastique et au moins une autre couche appliquée sur la couche de base B, et contenant au moins une couche externe A

i) présentant un nombre de saillies N par $mm^2$ de surface du film qui est en corrélation avec leurs hauteurs h respectives et leurs diamètres d respectifs par les relations suivantes :

$$\log N/mm^2 < A_h - B_h * \log h/\mu m \qquad 0{,}05\ \mu m < h < 1{,}0\ \mu m \quad (1)$$
$$A_h = 1{,}4\ ; \qquad B_h = 2{,}5$$

$$\log N/mm^2 < A_d - B_d * \log d/\mu m \qquad 0{,}2\ \mu m < d < 10{,}0\ \mu m \quad (2)$$
$$A_d = 3{,}4\ ; \qquad B_d = 2{,}4$$

et
ii) portant un revêtement en copolyester qui consiste en le produit de condensation des monomères suivants ou de leurs dérivés aptes à la formation de polyesters :

A) 65 à 95 % en moles d'acide isophtalique ;
B) 0 à 30 % en moles d'au moins un acide dicarboxylique aliphatique de formule

$$HOOC(CH_2)_nCOOH,$$

dans laquelle n se situe dans la plage allant de 1 à 11 ;
C) 5 à 15 % en moles d'au moins un monomère sulfo contenant un groupe sulfonate de métal alcalin sur un fragment aromatique d'un acide dicarboxylique ;
D) la quantité stoechiométrique requise pour la formation de 100 % en moles de produit de condensation, d'un glycol aliphatique ou cycloaliphatique copolymérisable, ayant de 2 à 11 atomes de carbone ;

les pourcentages étant chaque fois par rapport à la quantité totale des monomères formant le revêtement en polyester ; et
iii) la couche A contenant moins de 0,06 % en poids d'une matière de charge inerte.

**2.** Film de polyester selon la revendication 1, **caractérisé en ce que** la couche externe A présente une épaisseur de 0,1 à 3,0 μm.

**3.** Film de polyester selon une ou plusieurs des revendications 1 et 2, **caractérisé en ce que** le film a une structure bicouche et est constitué de la couche de base B et de la couche de recouvrement A.

**4.** Film de polyester selon une ou plusieurs des revendications 1 à 3, **caractérisé en ce que** le film a une structure tricouche et est constitué d'une couche de recouvrement externe A, de la couche de base B et d'une deuxième couche de recouvrement C qui est appliquée sur la face de la couche de base B qui est opposée à la couche de recouvrement A.

**5.** Film de polyester selon la revendication 4, **caractérisé en ce que** la couche de recouvrement C est pigmentée.

**6.** Film de polyester selon une ou plusieurs des revendications 1 à 5, **caractérisé en ce que** la couche de recouvrement A est pigmentée.

**7.** Film de PET selon une ou plusieurs des revendications 1 à 6, **caractérisé en ce que** le film est métallisé sur au moins une surface.

**8.** Film de polyester selon la revendication 7, **caractérisé en ce que** le film métallisé présente une perméation de l'oxygène de ≤ 1,2 $cm^3/m^2$.bar.d.

**9.** Film de polyester selon la revendication 7 ou 8, **caractérisé en ce que** le film métallisé présente une perméation de l'oxygène de ≤ 1,0 $cm^3/m^2$.bar.d.

**10.** Procédé pour la fabrication d'un film de polyester multicouche, orienté biaxialement, selon la revendication 1, dans lequel des masses fondues de polyester correspondant aux compositions des couches de base et de recouvrement sont envoyées à une filière multicouche, de celle-ci sont extrudées sur un cylindre refroidisseur et le préfilm ainsi obtenu est ensuite étiré biaxialement et thermofixé, et contenant au moins une couche de recouvrement externe A

i) présentant un nombre de saillies N par $mm^2$ de surface du film qui est en corrélation avec leurs hauteurs h respectives et leurs diamètres d respectifs par les relations suivantes :

$$\log N/mm^2 < A_h - B_h * \log h/\mu m \qquad 0{,}05\ \mu m < h < 1{,}0\ \mu m \qquad (1)$$

$$A_h = 1{,}4\ ; \qquad B_h = 2{,}5$$

$$\log N/mm^2 < A_d - B_d * \log d/\mu m \qquad 0{,}2\ \mu m < d < 10{,}0\ \mu m \qquad (2)$$

$$A_d = 3{,}4\ ; \qquad B_d = 2{,}4$$

et

ii) portant un revêtement en copolyester qui consiste en le produit de condensation des monomères suivants ou de leurs dérivés aptes à la formation de polyesters :

A) 65 à 95 % en moles d'acide isophtalique ;
B) 0 à 30 % en moles d'au moins un acide dicarboxylique aliphatique de formule

$$HOOC(CH_2)_nCOOH,$$

dans laquelle n se situe dans la plage allant de 1 à 11 ;
C) 5 à 15 % en moles d'au moins un monomère sulfo contenant un groupe sulfonate de métal alcalin sur un fragment aromatique d'un acide dicarboxylique ;
D) la quantité stoechiométrique requise pour la formation de 100 % en moles de produit de condensation, d'un glycol aliphatique ou cycloaliphatique copolymérisable, ayant de 2 à 11 atomes de carbone ;
les pourcentages étant chaque fois par rapport à la quantité totale des monomères formant le revêtement en polyester ; et

iii) la couche A contenant moins de 0,06 % en poids d'une matière de charge inerte.

**11.** Procédé pour la fabrication d'un film de polyester multicouche orienté biaxialement, selon la revendication 10, dans lequel du produit de régénération est envoyé à la filière d'extrusion à une concentration de 10 à 60 % en poids, par rapport au poids total du film.

**12.** Utilisation du film selon une ou plusieurs des revendications 1 à 9, pour le conditionnement de produits alimentaires et autres produits de consommation.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0144878 A
- US 3563942 A
- US 3779993 A
- EP 0602964 A


### In der Beschreibung aufgeführte Nicht-Patentliteratur


- **H. UTZ.** Barriereeigenschaften aluminiumbedampfter Kunststofffolien. *Technische Universität München,* 1995